# EUROPÄISCHE PATENTANMELDUNG

(11) **EP 2 845 682 A1**
(43) Veröffentlichungstag der Anmeldung: **11.03.2015**
(21) Anmeldenummer: 14183416.8
(22) Anmeldetag: 03.09.2014
(51) Int. Cl.: B23Q 11/08

(54) **Werkzeugmaschine**

(30) Priorität: 04.09.2013 DE 102013109649
(71) Anmelder: Index-Werke GmbH & Co. KG Hahn & Tessky, 73730 Esslingen (DE)
(72) Erfinder: Walker, Bernd, Dr., 73732 Esslingen (DE); Rohfleisch, Uwe, 73732 Esslingen (DE); Hammerl, Reiner, 72124 Pliezhausen (DE); Maier, Thomas, Prof. Dr., 72669 Unterensingen (DE); Schmid, Markus, Dr., 71296 Heimsheim (DE)
(74) Vertreter: Hoeger, Stellrecht & Partner Patentanwälte

(57) **Zusammenfassung**

Werkzeugmaschine (10) umfassend
ein Maschinengestell (12),
mindestens eine am Maschinengestell (12) und innerhalb eines Arbeitsraums (32) der Werkzeugmaschine (10) angeordnete Werkstückspindel (14) mit einer Werkstückaufnahme (16),
mindestens einen am Maschinengestell (12) und im Arbeitsraum (32) der Werkzeugmaschine (10) angeordneten Werkzeugträger (22) mit Werkzeugaufnahmen (24),
ein Maschinengehäuse (42), welches das Maschinengestell (12) und den Arbeitsraum (32) mit der darin angeordneten mindestens einen Werkstückspindel (14) und dem darin angeordneten mindestens einen Werkzeugträger (22) umschließt und welches eine an einer Frontseite (54) des Maschinengehäuses (42) angeordnete Zugangstür (48) zu dem Arbeitsraum (32) aufweist,
und eine Maschinensteuerung (10) zur Steuerung von Relativbewegungen zwischen der mindestens einen Werkstückspindel (14) und dem mindestens einen Werkzeugträger (22),
**dadurch gekennzeichnet, dass**die Werkstückaufnahme (16) der mindestens einen Werkstückspindel (14) innerhalb eines Ergonomiebereichs (80) der Werkzeugmaschine (10) angeordnet ist, der sich in vertikaler Richtung zwischen einer unteren, das Maschinengehäuse (42) schneidenden geometrischen Horizontalebene (82) und einer oberen, das Maschinengehäuse (42) tangierenden oder schneidenden geometrischen Horizontalebene (84) erstreckt und dass eine Frontseite (54) des Maschinengehäuse (42) in einem innerhalb des Ergonomiebereichs (80) liegenden und sich in vertikaler Richtung von der unteren geometrischen Horizontalebene (82) bis zur oberen geometrischen Horizontalebene (84) erstreckenden Ergonomieabschnitt (100) eine Oberflächengestaltung aufweist, die sich von einer Oberflächengestaltung eines in vertikaler Richtung unter der unteren geometrischen Horizontalebene (82) liegenden Basisabschnitts (120) der Frontseite (54) des Maschinengehäuses (42) unterscheidet.

## Beschreibung

Die Erfindung betrifft eine Werkzeugmaschine umfassend ein Maschinengestell, mindestens eine am Maschinengestell und innerhalb eines Arbeitsraums der Werkzeugmaschine angeordnete Werkstückspindel mit einer Werkstückaufnahme, mindestens einen am Maschinengestell und im Arbeitsraum der Werkzeugmaschine angeordneten Werkzeugträger mit Werkzeugaufnahmen, ein Maschinengehäuse, welches das Maschinengestell und den Arbeitsraum mit der darin angeordneten mindestens einen Werkstückspindel und dem darin angeordneten mindestens einen Werkzeugträger umschließt und welches eine an einer Frontseite des Maschinengehäuses angeordnete Zugangstür zu dem Arbeitsraum aufweist, und eine Maschinensteuerung zur Steuerung von Relativbewegungen zwischen der mindestens Werkstückspindel und dem mindestens einen Werkzeugträger.

Derartige Werkzeugmaschinen sind aus dem Stand der Technik bekannt.

Bei diesen Werkzeugmaschinen sind zusätzlich zum Wechseln von Werkstücken und Werkzeugen ständig Rüstarbeiten, Einstellarbeiten und Bedienoperationen durchzuführen.

Der Erfindung liegt daher die Aufgabe zugrunde, einer Bedienperson möglichst ergonomisch optimale Bedingungen bei den Rüstarbeiten, den Einstellarbeiten und den Bedienoperationen der Werkzeugmaschine zur Verfügung zu stellen.

Diese Aufgabe wird bei einer Werkzeugmaschine der eingangs beschriebenen Art erfindungsgemäß dadurch gelöst, dass die Werkstückaufnahme der mindestens einen Werkstückspindel innerhalb eines insbesondere räumlichen Ergonomiebereichs der Werkzeugmaschine angeordnet ist, der sich in vertikaler Richtung zwischen einer unteren, das Maschinengehäuse schneidenden geometrischen Horizontalebene und einer oberen, das Maschinengehäuse tangierenden oder schneidenden geometrischen Horizontalebene erstreckt und dass eine Frontseite des Maschinengehäuses in einem innerhalb des Ergonomiebereichs liegenden und sich in vertikaler Richtung von der unteren geometrischen Horizontalebene bis zur oberen geometrischen Horizontalebene erstreckenden Ergonomieabschnitt eine Oberflächengestaltung aufweist, die sich von einer Oberflächengestaltung eines in vertikaler Richtung unter der unteren geometrischen Horizontalebene liegenden Basisabschnitts der Frontseite des Maschinengehäuses unterscheidet.

Der Vorteil der erfindungsgemäßen Lösung ist darin zu sehen, dass einerseits durch die Anordnung der Werkstückaufnahme in dem Ergonomiebereich und die Gestaltung der Frontseite des Maschinengehäuses innerhalb des Ergonomiebereichs die Möglichkeit einer einfachen Orientierung für eine Bedienperson bei allen durchzuführenden Arbeiten gegeben ist.

Bei Werkzeugmaschinen deren Maschinengehäuse nicht mit der oberen geometrischen und das Maschinengehäuse tangierenden Horizontalebene endet sondern höher baut, so dass die obere Horizontalebene das Maschinengehäuse schneidet, ist zweckmäßigerweise vorgesehen, dass der Ergonomieabschnitt der Frontseite eine Oberflächengestaltung aufweist, die sich von einer Oberflächengestaltung eines in vertikaler Richtung über der oberen geometrischen Horizontalebene liegenden Kopfabschnitts der Frontseite des Maschinengehäuses unterscheidet.

Eine Orientierung der Bedienperson wird noch weiter dadurch verbessert, dass die Zugangstür in einem innerhalb des Ergonomiebereichs liegenden und sich in vertikaler Richtung von der unteren geometrischen Horizontalebene bis zur oberen geometrischen Horizontalebene erstreckenden Ergonomieabschnitt eine Oberflächengestaltung aufweist, die sich von der Oberflächengestaltung eines in vertikaler Richtung unter der unteren geometrischen Horizontalebene liegenden Basisabschnitts unterscheidet.

Bei Werkzeugmaschinen mit einem hoch bauenden Maschinengehäuse kann die Zugangstür so ausgebildet sein, dass sie sich nur bis zu der oberen geometrischen Horizontalebene erstreckt.

Ist jedoch die Zugangstür so ausgebildet, dass sie sich über die obere geometrische Horizontalebene nach oben hinaus erstreckt, ist vorzugsweise vorgesehen, dass der Ergonomieabschnitt der Zugangstür eine Oberflächengestaltung aufweist, die sich von der Oberflächengestaltung eines in vertikaler Richtung über der oberen geometrischen Horizontalebene liegenden Kopfabschnitts unterscheidet.

Besonders günstig ist es dabei, wenn die Oberflächengestaltung im Ergonomieabschnitt der Zugangstür identisch ist mit der Oberflächengestaltung im Ergonomieabschnitt der Frontseite des Maschinengehäuses.

Ferner ist es von Vorteil, wenn die Oberflächengestaltung des Basisabschnitts der Zugangstür mit der Oberflächengestaltung des Basisabschnitts der Frontseite des Maschinengehäuses identisch ist.

Darüber hinaus ist vorzugsweise vorgesehen, dass die Oberflächengestaltung des Kopfabschnitts der Zugangstür mit der Oberflächengestaltung des Kopfabschnitts der Frontseite des Maschinengehäuses identisch ist.

Eine weitere günstige Lösung sieht vor, dass die in einer Bereitstellung stehenden Werkzeugaufnahmen des mindestens einen Werkzeugträgers in dem Ergonomiebereich angeordnet sind.

Damit wird eine weitere Erleichterung des Umgangs mit der Werkzeugmaschine, insbesondere bei Rüstarbeiten und Einrichtarbeiten geschaffen.

Die erfindungsgemäße Werkzeugmaschine ist mit einer Maschinensteuerung versehen, die ebenfalls bei Rüstarbeiten, Einrichtarbeiten und weiteren Bedienoperationen bedient werden muss.

Aus diesem Grund ist es besonders vorteilhaft, wenn ein Anzeigefeld der Maschinensteuerung in dem Ergonomiebereich zwischen der unteren geometrischen Horizontalebene und oberen geometrischen Horizontalebene am Maschinengehäuse angeordnet ist.

Diese Anordnung des Anzeigefelds erleichtert außerdem die Orientierung der Bedienperson bei der Durchführung von Einricht- und Bedienoperationen.

Besonders günstig ist es dabei, wenn das Anzeigefeld an der Frontseite des Maschinengehäuses in dem Ergonomieabschnitt angeordnet ist.

Dabei könnte es der Fall sein, dass das Anzeigefeld sich noch in vertikaler Richtung über den Ergonomiebereich hinaus erstreckt.

Besonders zweckmäßig ist es daher, wenn das Anzeigefeld der Maschinensteuerung ausschließlich in dem Ergonomiebereich der Werkzeugmaschine angeordnet ist.

Darüber hinaus umfasst eine Maschinensteuerung einer erfindungsgemäßen Werkzeugmaschine zusätzlich noch ein von der Bedienperson zu betätigendes Bedienfeld.

Aus diesem Grund ist es besonders vorteilhaft, wenn ein Bedienfeld der Maschinensteuerung in dem Ergonomiebereich zwischen der unteren geometrischen Horizontalebene und der oberen geometrischen Horizontalebene am Maschinengehäuse angeordnet ist.

Durch eine derartige Anordnung des Bedienfelds wird ebenfalls die Durchführung von Rüst-, Einricht- und Bedienoperationen für eine Bedienperson erheblich erleichtert, da dadurch eine einfache Orientierung für die Bedienperson gegeben ist.

Vorzugsweise ist dabei vorgesehen, dass das Bedienfeld an der Frontseite des Maschinengehäuses im Bereich des Ergonomieabschnitts angeordnet ist, so dass die Bedienperson einfach bei Einrichtarbeiten oder Bedienoperationen auf das Bedienfeld zugreifen kann.

Auch das Bedienfeld könnte theoretisch noch über den Ergonomiebereich hinaus erstrecken.

Besonders vorteilhaft ist es jedoch, wenn das Bedienfeld ausschließlich in dem Ergonomiebereich angeordnet ist.

Gegebenenfalls umfasst eine Maschinensteuerung für eine erfindungsgemäße Werkzeugmaschine noch zusätzliche Bedienelemente, die beispielsweise außerhalb des Bedienfeldes liegen.

Aus diesem Grund ist vorzugsweise vorgesehen, dass sämtliche Bedienelemente der Maschinensteuerung im Ergonomiebereich zwischen der unteren geometrischen Horizontalebene und der oberen geometrischen Horizontalebene angeordnet sind.

Insbesondere ist dabei vorgesehen, dass sämtliche Bedienelemente der Maschinensteuerung ausschließlich in dem Ergonomiebereich des Maschinengehäuses angeordnet sind und sich somit nicht über diesen Ergonomiebereich hinaus erstrecken.

Darüber hinaus umfasst eine erfindungsgemäße Werkzeugmaschine noch weitere Anzeigeelemente für Betriebszustände der Werkzeugmaschine, beispielsweise für Hydraulikdruck, Hydrauliktemperatur, Schmiermittelzufuhr etc.

Um die Überwachung des Betriebs einer derartigen Werkzeugmaschine zu erleichtern, ist daher vorzugsweise vorgesehen, dass Anzeigeelemente der Werkzeugmaschine in dem Ergonomiebereich des Maschinengehäuses zwischen der unteren geometrischen Horizontalebene und der oberen geometrischen Horizontalebene angeordnet sind.

Eine besonders günstige Anordnung sieht vor, dass die Anzeigeelemente in dem Ergonomieabschnitt der Frontseite des Maschinengehäuses angeordnet sind.

Auch derartige Anzeigeelemente könnten sich über den Ergonomiebereich hinaus erstrecken.

Zweckmäßigerweise ist jedoch vorgesehen, dass sämtliche Anzeigeelemente ausschließlich in dem Ergonomiebereich des Maschinengehäuses angeordnet sind.

Darüber hinaus ist eine erfindungsgemäße Werkzeugmaschine auch noch mit Warnelementen versehen, die vor Fehlbedienungen warnen oder bei aus Fehlbedienungen resultierenden Betriebszuständen eine Warnung abgeben.

Beispielsweise können derartige Warnelemente Warnschilder oder Warnleuchten oder auch akustische Warneinheiten sein.

Zweckmäßigerweise ist dabei vorgesehen, dass die Warnelemente der Werkzeugmaschine ausschließlich im Ergonomiebereich zwischen der unteren geometrischen Horizontalebene und der oberen geometrischen Horizontalebene angeordnet sind.

Um eine eindeutige und für eine Bedienperson insbesondere eindeutig erkennbare Anordnung der Warnelemente vorzunehmen, ist vorzugsweise vorgesehen, dass die Warnelemente der Werkzeugmaschine ausschließlich im Ergonomiebereich zwischen der unteren geometrischen Horizontalebene und der oberen geometrischen Horizontalebene angeordnet sind.

Darüber hinaus ist die erfindungsgemäße Werkzeugmaschine zweckmäßigerweise mit einer Beobachtungseinheit zur Beobachtung von Vorgängen im Arbeitsraum versehen.

Zweckmäßigerweise ist eine derartige Beobachtungseinheit zur Beobachtung von Vorgängen im Arbeitsraum im Ergonomiebereich zwischen der unteren geometrischen Horizontalebene und der oberen geometrischen Horizontalebene angeordnet.

Eine derartige Beobachtungseinheit könnte beispielsweise auch, insbesondere wenn es sich um eine bilddarstellende Beobachtungseinheit handelt, an einer Frontseite des Maschinengehäuses angeordnet sein.

Insbesondere dann, wenn es sich jedoch bei der Beobachtungseinheit um ein Sichtfenster handelt, ist vorzugsweise vorgesehen, dass die Beobachtungseinheit im Ergonomieabschnitt an der Zugangstür angeordnet ist.

Dabei könnte aber auch die Beobachtungseinheit in diesem Fall eine bildgebende Beobachtungseinheit sein.

Auch die Beobachtungseinheit könnte beispielsweise sich über den Ergonomiebereich hinaus erstrecken.

Um auch hier eindeutige Verhältnisse zu schaffen, ist vorzugsweise vorgesehen, dass die Beobachtungseinheit ausschließlich im Ergonomiebereich zwischen der unteren geometrischen Horizontalebene und der oberen geometrischen Horizontalebene angeordnet ist.

Darüber hinaus ist vorzugsweise die Zugangstür des Maschinengehäuses auch mit einem Bediengriff versehen.

Um auch eine derartige Bedienung der Zugangstür für die Bedienperson möglichst ergonomisch günstig anzuordnen, ist vorzugsweise vorgesehen, dass ein Bediengriff der Zugangstür des Maschinengehäuses in dem Ergonomiebereich zwischen der unteren geometrischen Horizontalebene und der oberen geometrischen Horizontalebene angeordnet ist.

Vorzugsweise ist dabei der Bediengriff im Ergonomieabschnitt der Zugangstür, insbesondere ausschließlich im Ergonomieabschnitt der Zugangstür, angeordnet.

Um den Ergonomieabschnitt der Frontseite des Maschinengehäuses und der Zugangstür erkennbar von dem Basisabschnitt und dem gegebenenfalls vorgesehenen Kopfabschnitt abzusetzen ist vorzugsweise vorgesehen, dass der Ergonomieabschnitt der Frontseite des Maschinengehäuses und der Zugangstür als Oberflächengestaltung eine Oberflächenstruktur aufweisen, die sich von der Oberflächenstruktur des Basisabschnitts und der Oberflächenstruktur des gegebenenfalls vorgesehenen Kopfabschnitts unterscheidet.

Die Oberflächenstruktur kann dabei beispielsweise eine geprägte oder geriffelte oder gewellte Struktur sein.

Alternativ oder ergänzend dazu ist vorzugsweise vorgesehen, dass der Ergonomieabschnitt des Maschinengehäuses und der Zugangstür als Oberflächengestaltung eine optische Gestaltung aufweisen, die sich von der optischen Gestaltung des Basisabschnitts und der optischen Gestaltung des gegebenenfalls vorgesehenen Kopfabschnitts unterscheidet.

Ein Beispiel für eine derartige optische Gestaltung sieht beispielsweise vor, dass der Ergonomieabschnitt der Frontseite des Maschinengehäuses und der Zugangstür als Oberflächengestaltung eine Farbgebung aufweist, die sich von der Farbgebung des Basisabschnitts und der Farbgebung des gegebenenfalls vorgesehenen Kopfabschnitts unterscheidet.

Im einfachsten Fall lässt sich dies dadurch realisieren, dass der Ergonomieabschnitt der Frontseite des Maschinengehäuses und der Zugangstür eine einheitliche Farbgebung aufweisen, die sich von der einheitlichen Farbgebung des Basisabschnitts und der des gegebenenfalls vorgesehenen Kopfabschnitts unterscheidet.

Insoweit als sich der Ergonomieabschnitt von dem Basisabschnitt und dem gegebenenfalls vorgesehenen Kopfabschnitt unterscheiden soll, wäre es beispielsweise denkbar, den Basisabschnitt mit einer anderen Oberflächengestaltung zu versehen als den gegebenenfalls vorgesehenen Kopfabschnitt.

Eine besonders augenfällige Lösung sieht jedoch vor, dass der Basisabschnitt und der gegebenenfalls vorgesehene Kopfabschnitt die gleiche Oberflächengestaltung aufweisen.

Im Rahmen der bisherigen Erläuterung der erfindungsgemäßen Lösung wurde nicht näher darauf eingegangen, wie die obere geometrische Horizontalebene und die untere geometrische Horizontalebene relativ zueinander angeordnet sind.

Eine besonders günstige Lösung sieht vor, dass ein Abstand der oberen geometrische Horizontalebene von der unteren geometrische Horizontalebene mindestens 0,8 m und höchstens 1,5 m, vorzugsweise mindestens 1,0 m und höchstens 1,4 m, beträgt.

Ferner wurden im Zusammenhang mit der bisherigen Erläuterung der erfindungsgemäßen Lösung nicht näher definiert, in welcher Höhe die untere Horizontalebene über einer Standfläche für eine Bedienperson der Werkzeugmaschine angeordnet sein soll.

So sieht eine vorteilhafte Lösung vor, dass die untere Horizontalebene mindestens 0,6 m, noch besser mindestens 0,7 m, über einer Standfläche für eine Bedienperson der Werkzeugmaschine angeordnet ist.

Ferner ist es zweckmäßig, wenn die untere geometrische Horizontalebene höchstens 1,3 m, noch besser höchstens 1,1 m, über einer Standfläche für eine Bedienperson der Werkzeugmaschine angeordnet ist.

Ferner wurde bisher ebenfalls nicht näher die Lage der oberen geometrischen Horizontalebene definiert.

Aus diesem Grund ist zweckmäßigerweise vorgesehen, dass die obere geometrische Horizontalebene höchstens 2,2 m, noch besser 2,1 m, über einer Standfläche für eine Bedienperson der Werkzeugmaschine angeordnet ist.

Ferner ist es zweckmäßig, wenn die obere geometrische Horizontalebene mindestens 1,6, m, noch besser mindestens 1,7 m, über einer Standfläche für eine Bedienperson der Werkzeugmaschine angeordnet ist.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine Frontseite eines ersten Ausführungsbeispiels einer erfindungsgemäßen Werkzeugmaschine mit geschlossener Zugangstür zu dem Arbeitsraum;
- Fig. 2: eine perspektivische Ansicht von rechts vorne der erfindungsgemäßen Werkzeugmaschine bei geöffneter Zugangstür zu dem Arbeitsraum;
- Fig. 3: eine perspektivische Ansicht von links vorne der erfindungsgemäßen Werkzeugmaschine bei geöffneter Zugangstür zu dem Arbeitsraum;
- Fig. 4: eine Frontansicht eines zweiten Ausführungsbeispiels der erfindungsgemäßen Werkzeugmaschine und
- Fig. 5: eine Frontansicht ähnlich Fig. 1 eines dritten Ausführungsbeispiels der erfindungsgemäßen Werkzeugmaschine.

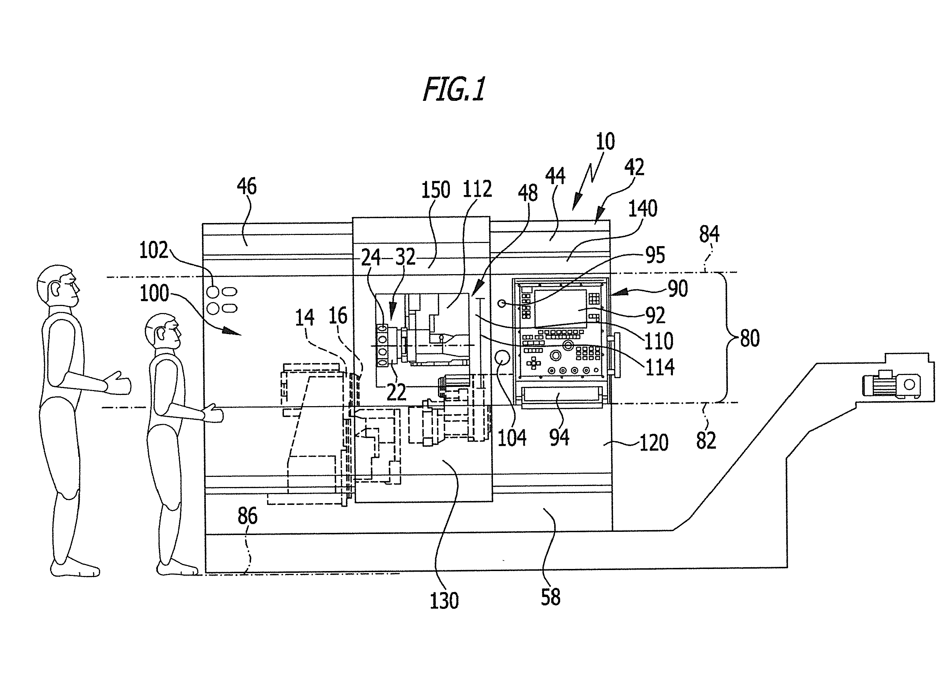

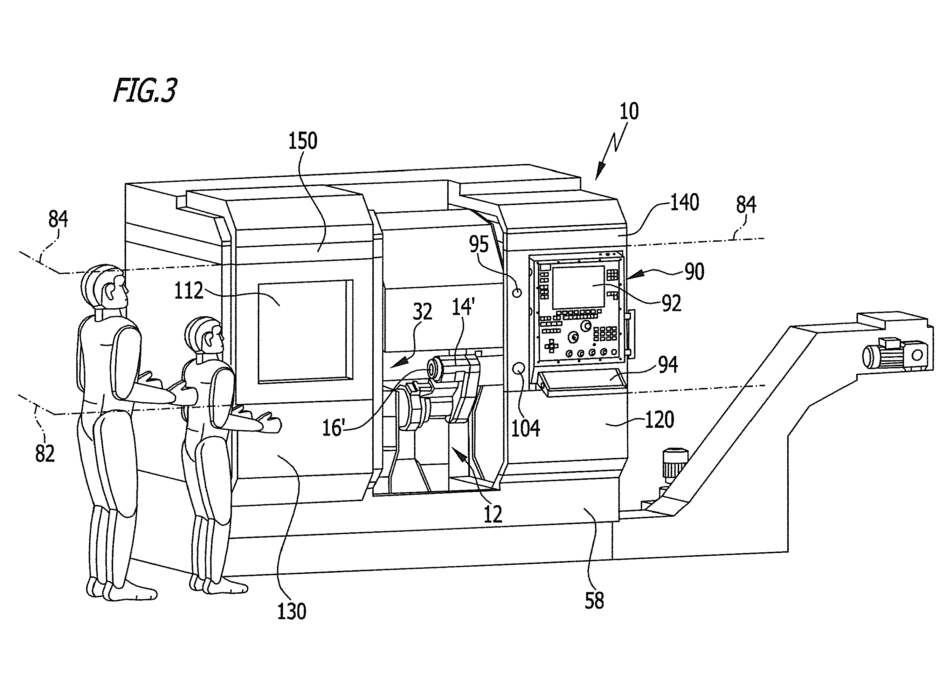

Ein in den Fig. 1 bis 3 dargestelltes erstes Ausführungsbeispiel einer erfindungsgemäßen Werkzeugmaschine 10 umfasst ein Maschinengestell 12, an welchem mindestens eine Werkstückspindel 14 mit einer Werkstückaufnahme 16 sowie mindestens ein Werkzeugträger 22 mit Werkzeugaufnahmen 24 gehalten und relativ zueinander bewegbar sind.

Dabei sind die mindestens eine Werkstückspindel 14 mit der Werkstückaufnahme 16 sowie der mindestens eine Werkzeugträger 22 mit den Werkzeugaufnahmen 24 in einem als Ganzes mit 32 bezeichneten Arbeitsraum der Werkzeugmaschine 10 angeordnet.

Der Arbeitsraum 32, die mindestens eine Werkstückspindel 14, der mindestens eine Werkzeugträger 22 sowie das diese haltende Maschinengestell 12 werden umschlossen von einem als Ganzes mit 42 bezeichneten Maschinengehäuse, welches einen ersten vorderen Gehäuseabschnitt 44 und einen zweiten vorderen Gehäuseabschnitt 46 aufweist, zwischen denen der Arbeitsraum 32 angeordnet ist, wobei ein Zugang zu dem Arbeitsraum 32 durch eine als Ganzes mit 48 bezeichnete Zugangstür verschließbar ist.

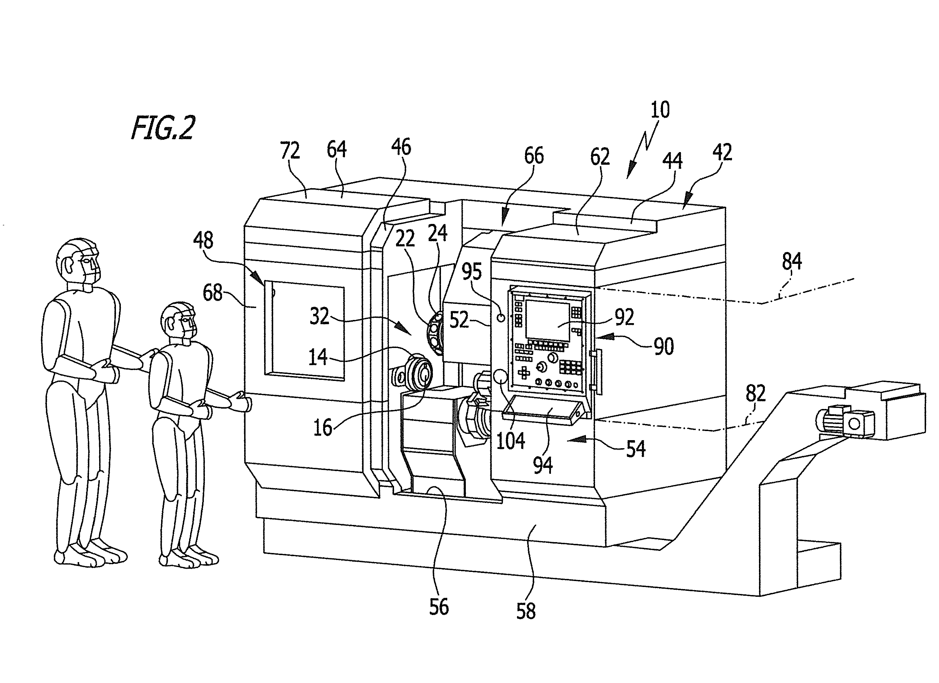

Die Zugangstür 48 ist vorzugsweise als Schiebetür ausgebildet und von ihrer in Fig. 1 dargestellten, einen Zugang zum Arbeitsraum 32 verschließenden Stellung, in eine in Fig. 2 dargestellte offene Stellung verschiebbar ist, in welcher die Zugangstür 48 beispielsweise vor dem zweiten vorderen Gehäuseabschnitt 46 steht und einen freien Zugang zum Arbeitsraum 32 zulässt.

Um insbesondere einen optimalen Zugang zu dem Arbeitsraum 32 zu ermöglichen, erstreckt sich eine Zugangsöffnung 52 zu dem Arbeitsraum 32 im Bereich einer Frontseite 54 des Maschinengehäuses 42 ausgehend von einem unteren Rand 56, der in Höhe eines Sockelabschnitts 58 des Maschinengehäuses 42 angeordnet ist, über die gesamte Frontseite 54 des Maschinengehäuses 42 und auch noch im Bereich von Deckeln 62, 64 der Gehäuseabschnitte 44, 46 von der Frontseite 54 weg bis zu einem hinteren Gehäuseabschnitt 66, welcher den Arbeitsraum 32 begrenzt und sich auch hinter den vorderen Gehäuseabschnitten 44, 46 erstreckt.

Um eine derart gestaltete Zugangsöffnung 52 zu verschließen, weist daher die Zugangstür 48 eine Frontpartie 68 auf, die sich von dem Sockelabschnitt 58 bis zu den Deckeln 62, 64 erstreckt sowie eine Deckelpartie 72, welche die sich über die Deckel 62, 64 von der Frontseite 54 noch bis zum hinteren Gehäuseabschnitt 66 erstreckt und die Zugangsöffnung 52 abdeckt.

Zur optimalen Bedienung der Werkzeugmaschine 10 ist diese so aufgebaut, dass diese einen insbesondere räumlichen Ergonomiebereich 80 aufweist, der sich in vertikaler Richtung zwischen einer unteren geometrischen Horizontalebene 82 und einer oberen geometrischen Horizontalebene 84 erstreckt, wobei die untere geometrische Horizontalebene 82 das Maschinengehäuse 42 schneidend angeordnet ist und die obere geometrische Horizontalebene 84 das Maschinengehäuse 42 bei diesem ersten Ausführungsbeispiel ebenfalls schneidet.

Beispielsweise kann sich bei einem nicht hoch bauenden Maschinengehäuse 42 dieses nur bis zur oberen geometrischen Horizontalebene 84 erstrecken.

Bei höher bauenden Maschinengehäusen 42 erstrecken sich diese über die obere geometrische Horizontalebene 84 hinaus, wie in Fig. 1 bis 3 dargestellt.

Beispielsweise liegt die untere Horizontalebene 82 auf einer Höhe zwischen 0,7 m und 1,1 m über einer Standfläche 86 für eine Bedienperson der Werkzeugmaschine 10, wobei im einfachsten Fall die Standfläche 86 einer Aufstellfläche der Werkzeugmaschine 10 entspricht.

Ferner liegt beispielsweise die obere geometrische Horizontalebene 84 auf einer Höhe zwischen 1,7 m und 2,1 m über der Standfläche 86 für eine Bedienperson.

Die erfindungsgemäße Werkzeugmaschine 10 ist dabei so aufgebaut, dass die Werkstückaufnahme 16 der Werkstückspindel 14 innerhalb des Ergonomiebereichs 80 liegt.

Ferner ist auch vorzugsweise vorgesehen, dass in einer Bestückungsstellung stehende Werkzeugaufnahmen 24 des mindestens einen Werkzeugträgers 22 ebenfalls in dem Ergonomiebereich 80 liegen.

Damit wird die Möglichkeit eröffnet, die Werkstückaufnahme 16 und die in Bestückungsstellung stehenden Werkzeugaufnahmen 24 so anzuordnen, dass sie ergonomisch günstig für eine durchschnittliche Bedienperson angeordnet sind und somit das Auswechseln und/oder Vermessen eines Werkstücks in der Werkzeugaufnahme 16 sowie das Auswechseln und/oder Vermessen von Werkzeugen, die in in der Bestückungsstellung stehende Werkzeugaufnahmen 24 einzusetzen sind, günstig durchführbar ist.

Auch eine weitere Werkstückspindel 14' ist vorzugsweise so angeordnet, dass deren Werkstückaufnahme 16' in dem Ergonomiebereich 80 positionierbar ist.

Ferner umfasst die Werkzeugmaschine 10 noch eine als Ganzes mit 90 bezeichnete Maschinensteuerung, welche mit einem Anzeigefeld 92 versehen ist, wobei das Anzeigefeld 92 ebenfalls innerhalb des Ergonomiebereichs 80 liegt.

Die Maschinensteuerung 90 umfasst außerdem noch ein Bedienfeld 94 mit Bedientasten, wobei auch das Bedienfeld 94 derart angeordnet ist, dass dieses innerhalb des Ergonomiebereichs 80 liegt.

Vorzugsweise sind sowohl das Anzeigefeld 92 als auch das Bedienfeld 94 der Maschinensteuerung an der Frontseite 54 des Maschinengehäuses 42 angeordnet und zwar ausschließlich innerhalb eines sich zwischen der unteren geometrischen Horizontalebene 82 und der oberen geometrischen Horizontalebene 84 erstreckenden Ergonomieabschnitts 100 der Frontseite 54, der sich in gleicher Weise wie der Ergonomiebereich 80 in vertikaler Richtung zwischen der unteren geometrischen Horizontalebene 82 und der oberen geometrischen Horizontalebene 84 erstreckt.

Beispielsweise umfasst die Maschinensteuerung 90 auch noch außerhalb des Bedienfeldes 94 liegende Bedienelemente 95, die ebenfalls innerhalb des Ergonomieabschnitts 100 angeordnet sind.

Darüber hinaus sind auch vorzugsweise sämtliche Anzeigeelemente 102 der Werkzeugmaschine 10 insbesondere ausschließlich in dem Ergonomieabschnitt 100 der Frontseite 54, beispielsweise an dem Gehäuseabschnitt 46 des Maschinengehäuses 42, angeordnet, wobei diese Anzeigeelemente beispielsweise Druck- oder Temperatur- oder Durchflussanzeigen darstellen.

Darüber hinaus sind auch vorzugsweise sämtliche Warnelemente 104 insbesondere ausschließlich in dem Ergonomieabschnitt 100 der Frontseite 54 angeordnet.

Auch die Zugangstür 48 weist einen sich in vertikaler Richtung zwischen der unteren geometrischen Horizontalebene 82 und der oberen geometrischen Horizontalebene 84 erstreckenden und im Ergonomiebereich 80 liegenden Ergonomieabschnitt 110 auf, in welchem eine Beobachtungseinheit 112 zum Beobachten des Arbeitsraums 32 angeordnet ist, die sich insbesondere nicht über den Ergonomieabschnitt 110 hinaus erstreckt.

Das Beobachtungselement 112 kann beispielsweise im einfachsten Fall eine Sichtscheibe sein, es ist aber auch denkbar, eine elektronische Visualisierungseinheit vorzusehen, die durch elektronische Bildgenerierung und Bildverarbeitung eine Darstellung der Vorgänge im Arbeitsraum 32 liefert.

Ferner ist auch im Ergonomieabschnitt 110 der Zugangstür 48 ein Bediengriff 114 vorgesehen, welcher ebenfalls ausschließlich im Ergonomieabschnitt 110 angeordnet ist.

Um die Ergonomieabschnitte 100 und 110 der Frontseite 54 bzw. der Zugangstür 48 leicht erkennbar von den übrigen Partien der Frontseite 54 bzw. der Zugangstür 48 abzusetzen, ist vorgesehen, dass die Ergonomieabschnitte 100 und 110 eine Gestaltung aufweisen, die sich von einer Gestaltung eines in vertikaler Richtung unterhalb der unteren geometrischen Horizontalebene 82 liegenden Basisabschnitts 120 der Frontseite 54 bzw. eines in vertikaler Richtung unterhalb der unteren geometrischen Horizontalebene 82 liegenden Basisabschnitts 130 der Zugangstür 48 abhebt sowie auch optisch von einer Gestaltung eines in vertikaler Richtung über der oberen geometrischen Horizontalebene 84 und den Deckeln 62, 64 liegenden Kopfabschnitts 140 der Frontseite 54 sowie eines in vertikaler Richtung über der oberen geometrischen Horizontalebene 84 und den Deckeln 62, 64 liegenden Kopfabschnitts 150 der Zugangstür 48 abhebt.

Eine derartige Gestaltung der Ergonomieabschnitte 100 und 110 kann beispielsweise durch eine Oberflächenstruktur der Frontseiten erfolgen, die sich von den Oberflächenstrukturen der Basisabschnitte 120 und 130 bzw. der Kopfabschnitte 140 und 150 unterscheidet.

Alternativ oder ergänzend dazu kann die Gestaltung der Ergonomieabschnitte 100 und 110 bei dem ersten Ausführungsbeispiel durch eine Farbgestaltung erfolgen, die sich von der Farbgestaltung der Basisabschnitte 120 und 130 sowie der Kopfabschnitte 140 und 150 der Frontseite 54 bzw. der Zugangstür 48 unterscheidet.

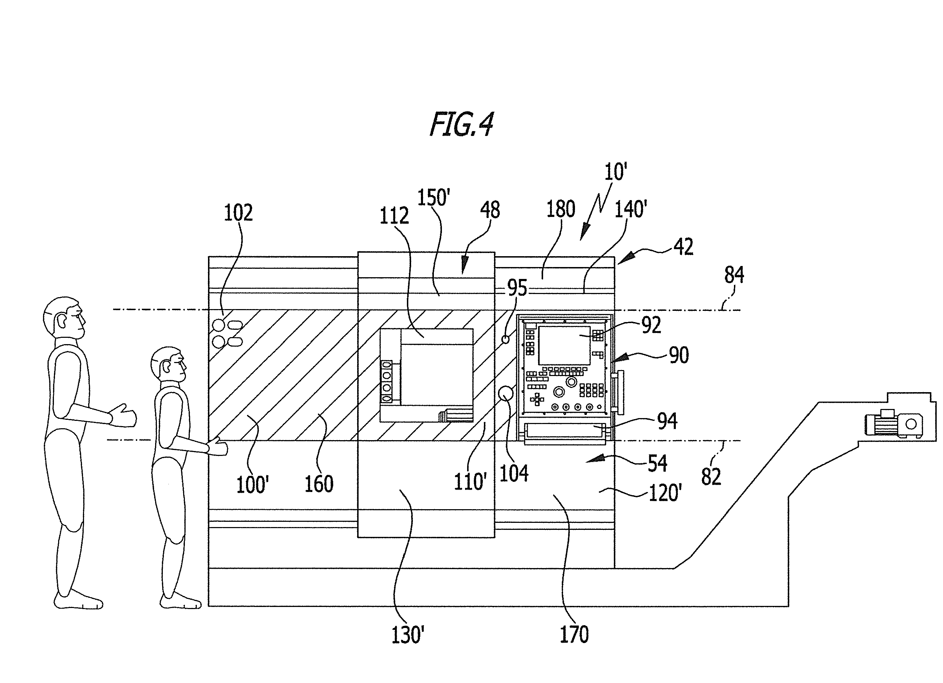

Im in Fig. 1 bis 3 dargestellten einfachsten Fall ist eine Farbgestaltung, insbesondere eine einheitliche Farbgebung, zum Beispiel durch eine Signalfarbe, wie zum Beispiel rot oder blau oder grün, der Ergonomieabschnitte 100 und 110 vorgesehen, wobei die Basisabschnitte 120 und 130 sowie die Kopfabschnitte 140 und 150 eine andere Farbgestaltung, insbesondere im einfachsten Fall eine einheitliche Farbgestaltung, zum Beispiel durch eine unauffällige Hintergrundfarbe, wie zum Beispiel beige oder grau, aufweisen, die diese von den Ergonomieabschnitten 100 und 110 deutlich unterscheidet. Bei einem zweiten Ausführungsbeispiel der erfindungsgemäßen Werkzeugmaschine 10', dargestellt in Fig. 4, sind die Ergonomieabschnitte 100' und 110' mit einer strukturierten Oberfläche 160 versehen, die das optische Erscheinungsbild prägt und somit die Ergonomieabschnitte 100' und 110' gegenüber den Basisabschnitten 120' und 130' sowie den Kopfabschnitten 140' und 150' mit strukturlosen Oberflächen 170 bzw. 180 deutlich hervorhebt.

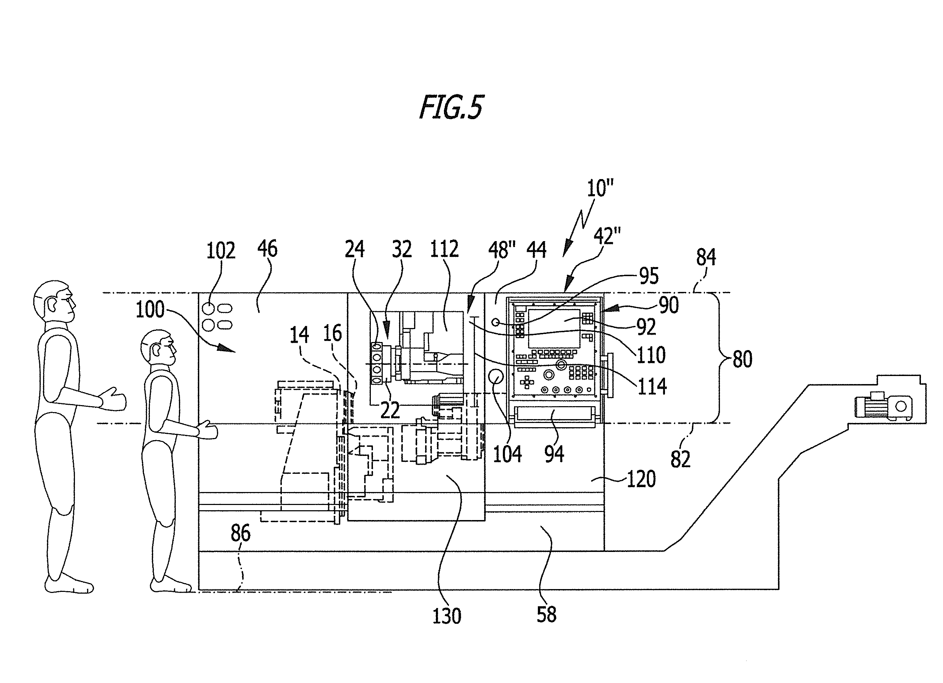

Bei einem dritten Ausführungsbeispiel, dargestellt in Fig. 5, baut das Maschinengehäuse 42" weniger hoch als bei den voranstehenden Ausführungsbeispielen, so dass sich dieses nur bis zur oberen geometrischen Horizontalebene 84 erstreckt, die in diesem Fall das Maschinengehäuse 42" nicht schneidet sondern nur tangiert, so dass weder das Maschinengehäuse 42" noch die Zugangstür 48" einen Kopfabschnitt aufweisen.

Im Übrigen sind das zweite und das dritte Ausführungsbeispiel in gleicher Weise ausgebildet wie das erste Ausführungsbeispiel, so dass dieselben Elemente mit denselben Bezugszeichen versehen sind und auf die Ausführungen zu diesen vollinhaltlich Bezug genommen werden kann.

## Patentansprüche

1. Werkzeugmaschine (10) umfassend
ein Maschinengestell (12),
mindestens eine am Maschinengestell (12) und innerhalb eines Arbeitsraums (32) der Werkzeugmaschine (10) angeordnete Werkstückspindel (14) mit einer Werkstückaufnahme (16),
mindestens einen am Maschinengestell (12) und im Arbeitsraum (32) der Werkzeugmaschine (10) angeordneten Werkzeugträger (22) mit Werkzeugaufnahmen (24),
ein Maschinengehäuse (42), welches das Maschinengestell (12) und den Arbeitsraum (32) mit der darin angeordneten mindestens einen Werkstückspindel (14) und dem darin angeordneten mindestens einen Werkzeugträger (22) umschließt und welches eine an einer Frontseite (54) des Maschinengehäuses (42) angeordnete Zugangstür (48) zu dem Arbeitsraum (32) aufweist,
und eine Maschinensteuerung (10) zur Steuerung von Relativ-bewegungen zwischen der mindestens einen Werkstückspindel (14) und dem mindestens einen Werkzeugträger (22),
**dadurch gekennzeichnet, dass** die Werkstückaufnahme (16) der mindestens einen Werkstückspindel (14) innerhalb eines Ergonomiebereichs (80) der Werkzeugmaschine (10) angeordnet ist,
der sich in vertikaler Richtung zwischen einer unteren, das Maschinengehäuse (42) schneidenden geometrischen Horizontalebene (82) und einer oberen, das Maschinengehäuse (42) tangierenden oder schneidenden geometrischen Horizontalebene (84) erstreckt und dass eine Frontseite (54) des Maschinengehäuse (42) in einem innerhalb des Ergonomiebereichs (80) liegenden und sich in vertikaler Richtung von der unteren geometrischen Horizontalebene (82) bis zur oberen geometrischen Horizontalebene (84) erstreckenden Ergonomieabschnitt (100) eine Oberflächengestaltung aufweist, die sich von einer Oberflächengestaltung eines in vertikaler Richtung unter der unteren geometrischen Horizontalebene (82) liegenden Basisabschnitts (120) der Frontseite (54) des Maschinengehäuses (42) unterscheidet.

2. Werkzeugmaschine nach Anspruch 1, **dadurch gekennzeichnet, dass** der Ergonomieabschnitt (100) der Frontseite (54) eine Oberflächengestaltung aufweist, die sich von einer Oberflächengestaltung eines in vertikaler Richtung über der oberen geometrischen Horizontalebene (84) liegenden Kopfabschnitts (140) der Frontseite (54) des Maschinengehäuses (42) unterscheidet.

3. Werkzeugmaschine nach Anspruch 1 oder 2, **dadurch gekennzeichnet, dass** die Zugangstür (48) in einem innerhalb des Ergonomiebereichs (80) liegenden und sich in vertikaler Richtung von der unteren geometrischen Horizontalebene (82) bis zur oberen geometrischen Horizontalebene (84) erstreckenden Ergonomieabschnitts (110) eine Oberflächengestaltung aufweist, die sich von einer Oberflächengestaltung eines in vertikaler Richtung unter der unteren geometrischen Horizontalebene (82) liegenden Basisabschnitts (130) unterscheidet und dass insbesondere der Ergonomieabschnitt (110) der Zugangstür (48) eine Oberflächengestaltung aufweist, die sich von einer Oberflächengestaltung eines in vertikaler Richtung über der oberen geometrischen Horizontalebene (84) liegenden Kopfabschnitts (150) unterscheidet.

4. Werkzeugmaschine nach Anspruch 3, **dadurch gekennzeichnet, dass** die Oberflächengestaltung im Ergonomieabschnitt (110) der Zugangstür (48) mit der Oberflächengestaltung des Ergonomieabschnitts (100) der Frontseite (54) des Maschinengehäuses (42) identisch ist.

5. Werkzeugmaschine nach einem der voranstehenden Ansprüche, **dadurch gekennzeichnet, dass** die in einer Bestückungsstellung stehenden Werkzeugaufnahmen (24) des mindestens einen Werkzeugträgers (22) in dem Ergonomiebereich (80) angeordnet sind.

6. Werkzeugmaschine nach einem der voranstehenden Ansprüche, **dadurch gekennzeichnet, dass** ein Anzeigefeld (92) der Maschinensteuerung (90) in dem Ergonomiebereich (80) zwischen der unteren geometrischen Horizontalebene (82) und der oberen geometrischen Horizontalebene (84) am Maschinengehäuse (42) angeordnet ist und dass insbesondere das Anzeigefeld (92) an der Frontseite (54) des Maschinengehäuses (42) in dem Ergonomieabschnitt (100) angeordnet ist.

7. Werkzeugmaschine nach einem der voranstehenden Ansprüche, **dadurch gekennzeichnet, dass** ein Bedienfeld (94) der Maschinensteuerung (10) in dem Ergonomiebereich (80) zwischen der unteren geometrischen Horizontalebene (82) und der oberen geometrischen Horizontalebene (84) am Maschinengehäuse (10) angeordnet ist und dass insbesondere das Bedienfeld (94) an der Frontseite (54) des Maschinengehäuses (42) im Bereich des Ergonomieabschnitts (100) angeordnet ist.

8. Werkzeugmaschine nach einem der voranstehenden Ansprüche, **dadurch gekennzeichnet, dass** sämtliche Bedienelemente (94, 95) der Maschinensteuerung (90) im Ergonomiebereich (80) zwischen der unteren geometrischen Horizontalebene (82) und der oberen geometrischen Horizontalebene (84) angeordnet sind.

9. Werkzeugmaschine nach einem der voranstehenden Ansprüche, **dadurch gekennzeichnet, dass** Anzeigeelemente (102) der Werkzeugmaschine (10) in dem Ergonomiebereich (80) des Maschinengehäuses (42) zwischen der unteren geometrischen Horizontalebene (82) und der oberen geometrischen Horizontalebene (84) angeordnet sind.

10. Werkzeugmaschine nach einem der voranstehenden Ansprüche, **dadurch gekennzeichnet, dass** Warnelemente (104) der Werkzeugmaschine (10) im Ergonomiebereich (80) zwischen der unteren geometrischen Horizontalebene (82) und der oberen geometrischen Horizontalebene (84) angeordnet sind.

11. Werkzeugmaschine nach einem der voranstehenden Ansprüche, **dadurch gekennzeichnet, dass** eine Beobachtungseinheit (112) zur Beobachtung von Vorgängen im Arbeitsraum (32) im Ergonomiebereich (80) zwischen der unteren geometrischen Horizontalebene (82) und der oberen geometrischen Horizontalebene (84) angeordnet ist.

12. Werkzeugmaschine nach einem der voranstehenden Ansprüche, **dadurch gekennzeichnet dass** ein Bediengriff (114) der Zugangstür (48) des Maschinengehäuses (42) in dem Ergonomiebereich (80) zwischen der unteren geometrischen Horizontalebene (82) und der oberen geometrischen Horizontalebene (84) angeordnet ist und dass insbesondere der Bediengriff (114) im Ergonomieabschnitt (110) der Zugangstür (48) angeordnet ist.

13. Werkzeugmaschine nach einem der voranstehenden Ansprüche, **dadurch gekennzeichnet, dass** der Ergonomieabschnitt (100, 110) der Frontseite (54) des Maschinengehäuses (42) und der Zugangstür (48) als Oberflächengestaltung eine Oberflächenstruktur aufweist, die sich von der Oberflächenstruktur des Basisabschnitts (120, 130) und der Oberflächenstruktur des gegebenenfalls vorgesehenen Kopfabschnitts (140, 150) unterscheidet.

14. Werkzeugmaschine nach einem der voranstehenden Ansprüche, **dadurch gekennzeichnet, dass** der Ergonomieabschnitt (100, 110) der Frontseite (54) des Maschinengehäuses (42) und der Zugangstür (48) als Oberflächengestaltung eine optische Gestaltung aufweisen, die sich von der optischen Gestaltung des Basisabschnitts (120, 130) und der optischen Gestaltung des gegebenenfalls vorgesehenen Kopfabschnitts (140, 150) unterscheidet.

15. Werkzeugmaschine nach einem der voranstehenden Ansprüche, **dadurch gekennzeichnet, dass** der Ergonomieabschnitt (100, 110) der Frontseite (54) des Maschinengehäuses (42) und der Zugangstür (48) als Oberflächengestaltung eine Farbgebung aufweist, die sich von der Farbgebung des Basisabschnitts (120, 130) und der Farbgebung des gegebenenfalls vorgesehenen Kopfabschnitts (140, 150) unterscheidet.

16. Werkzeugmaschine nach einem der voranstehenden Ansprüche, **dadurch gekennzeichnet, dass** der Ergonomieabschnitt (100, 110) der Frontseite (54) des Maschinengehäuses (42) und der Zugangstür (48) eine einheitliche Farbgebung aufweisen, die sich von der einheitlichen Farbgebung des Basisabschnitts (120, 130) und des gegebenenfalls vorgesehenen Kopfabschnitts (140, 150) unterscheidet.
